# EUROPEAN PATENT APPLICATION

(11) **EP 4 187 708 A1**
(43) Date of publication of application: **31.05.2023**
(21) Application number: 21952385.9
(22) Date of filing: 06.08.2021
(51) Int. Cl.: H01M 50/569, H01M 50/543, H01R 13/62, H01R 13/639, H01R 13/42

(54) **BATTERY, ELECTRICAL DEVICE, AND BATTERY MANUFACTURING METHOD AND EQUIPMENT**

(71) Applicant: Jiangsu Contemporary Amperex Technology Limited, Liyang, Jiangsu 213300 (CN)
(72) Inventor: HUANG, Aifang, Hangzhou, Jiangsu 213300 (CN); CHEN, Qifeng, Hangzhou, Jiangsu 213300 (CN)
(74) Representative: Holt, Lucy Rose
(86) International application number: PCT/CN2021/111129
(87) International publication number: WO 2023/010510

(57) **Abstract**

The present application relates to a battery, a power consuming device, and a method and apparatus for manufacturing a battery, relating to the technical field of battery manufacturing. The present application provides a battery, including: a battery cell; a sampling terminal for acquiring a voltage or a temperature of the battery cell; and a busbar component for being electrically connected to the battery cell, where the busbar component includes a plug-in structure configured for the sampling terminal to be inserted in a first direction to connect with the busbar component, and the plug-in structure is configured for the sampling terminal to be pulled out in a second direction so as to be separated from the busbar component, the first direction intersecting the second direction. Since an insertion direction and a pull-out direction of the sampling terminal are different, the sampling terminal can be detached by utilizing a space, at one side in the pull-out direction, of the busbar component, so as to detach and replace the sampling terminal easily. The present application further provides a power consuming device, including the battery described above. The present application further provides a method and apparatus for manufacturing a battery, in order to manufacture the battery described above.

## Description

### Technical Field

The present application relates to the technical field of battery manufacturing, and in particular to a battery, a power consuming device, and a method and apparatus for manufacturing a battery.

### Background Art

Inside the battery, electrode terminals of a plurality of battery cells are generally connected through a busbar component, so that the battery cells are electrically connected to one another. In order to evaluate the working state of the battery cell, a sampling terminal is generally connected to the busbar component, and the sampling terminal is configured for acquiring information of the battery cell, such as the voltage, temperature, etc. After the battery is used for a long time, the sampling terminal may be aged or damaged, and thus cannot effectively acquire the information of the battery cell. Therefore, after the sampling terminal is aged or damaged, it is required to detach the sampling terminal, and replace the detached the sampling terminal with a new sampling terminal.

However, when the sampling terminal is detached, the battery has been assembled properly, which makes it very difficult to detach the sampling terminal.

### Summary of the Invention

In view of this, the present application provides a battery, a power consuming device, and a method and apparatus for manufacturing a battery. A sampling terminal is easy to detach and replace.

In a first aspect, an embodiment of the present application provides a battery, including: a battery cell; a sampling terminal for acquiring a voltage or a temperature of the battery cell; and a busbar component for being electrically connected to the battery cell, where the busbar component includes a plug-in structure configured for the sampling terminal to be inserted in a first direction to connect with the busbar component, and the plug-in structure is configured for the sampling terminal to be pulled out in a second direction so as to be separated from the busbar component, the first direction intersecting the second direction.

Since an insertion direction and a pull-out direction of the sampling terminal are different, the sampling terminal can be detached by utilizing a space at one side in the pull-out direction of the busbar component, so as to detach and replace the sampling terminal easily.

According to some embodiments of the present application, the busbar component further includes a body including a first surface away from the battery cell, the plug-in structure includes a first protrusion and a second protrusion arranged on the first surface, the first protrusion and the second protrusion are arranged at an interval in a third direction, the third direction being perpendicular to the first direction and intersecting the second direction, and the sampling terminal is configured for being inserted between the first protrusion and the second protrusion.

The first protrusion and the second protrusion can limit the sampling terminal jointly, so that the sampling terminal is inserted between the first protrusion and the second protrusion in the first direction on the first surface of the body.

According to some embodiments of the present application, the first protrusion is provided with a first limiting portion, the second protrusion is provided with a second limiting portion, and the first limiting portion and the second limiting portion are configured for abutting against the sampling terminal, so as to restrain the sampling terminal from moving in the second direction.

The first limiting portion and the second limiting portion abut against the sampling terminal, so as to prevent the sampling terminal in a sampling state from being separated from the plug-in structure in the second direction.

According to some embodiments of the present application, the first protrusion is provided with two first abutting portions arranged at an interval in the first direction, the second protrusion is provided with two second abutting portions arranged at an interval in the first direction, and the two first abutting portions and the two second abutting portions are configured for abutting against the sampling terminal, so as to restrain the sampling terminal from moving in the third direction.

The two first abutting portions and the two second abutting portions abut against the sampling terminal jointly, so that the sampling terminal can be clamped, without displacing in the third direction.

According to some embodiments of the present application, the first protrusion includes a first top wall and two first side walls, where the two first side walls are oppositely arranged in the first direction, two ends of each of the first side walls are connected to the body and the first top wall, respectively, at least part of the first top wall is configured as the first limiting portion, and one side, close to the second protrusion in the third direction, of each of the first side walls is configured as the first abutting portion; and the second protrusion includes a second top wall and two second side walls, where the two second side walls are oppositely arranged in the first direction, two ends of each of the second side walls are connected to the body and the second top wall, respectively, at least part of the second top wall is configured as the second limiting portion, and one side, close to the first protrusion in the third direction, of each of the second side walls is configured as the second abutting portion.

The first protrusion and the second protrusion are of raised structures formed on the body, respectively, and two sides of each of the raised structures are each provided with an opening, so that the corresponding limiting portions and the corresponding abutting portions can be formed, and processing is facilitated.

According to some embodiments of the present application, the first protrusion further includes a third side wall located at one side of the first protrusion away from the second protrusion in the third direction, the third side wall is connected to the body, the first top wall, and the two first side walls, respectively, and the first top wall, the two first side walls, and the third side wall enclose a first cavity; and the second protrusion further includes a fourth side wall located at one side of the second protrusion away from the first protrusion in the third direction, the fourth side wall is connected to the body, the second top wall, and the two second side walls, respectively, and the second top wall, the two second side walls, and the fourth side wall enclose a second cavity.

The first protrusion and the second protrusion are of raised structures formed on the body, respectively, and one side of each of the raised structures is provided with an opening, so that the corresponding limiting portions and the corresponding abutting portions can be formed, and processing is facilitated.

According to some embodiments of the present application, the sampling terminal includes a first outer side surface and a second outer side surface opposite each other in the third direction, the first outer side surface is configured for abutting against the two first abutting portions, the second outer side surface is configured for abutting against the two second abutting portions, the first outer side surface is a cambered surface arched towards the first protrusion, and the second outer side surface is a cambered surface arched towards the second protrusion.

The first outer side surface and the second outer side surface of the sampling terminal are a pair of cambered surfaces away from each other, the first outer side surface abuts against the two first abutting portions, and the second outer side surface abuts against the two second abutting portions, which can simplify the configuration of the sampling terminal, and also can restrain the sampling terminal such that the sampling terminal is fixed to the plug-in structure both in the third direction and the first direction.

According to some embodiments of the present application, the body is provided with a through hole, and the first protrusion and the second protrusion are arranged at an edge of the through hole.

The through hole is provided between the first protrusion and the second protrusion, so as to facilitate forming of the first protrusion and the second protrusion.

According to some embodiments of the present application, the sampling terminal includes an elastic sampling portion configured for being inserted between and pressed by the first protrusion and the second protrusion.

The sampling terminal is inserted between the first protrusion and the second protrusion through the elastic sampling portion, to sample information of the busbar component.

According to some embodiments of the present application, the elastic sampling portion is provided with a pair of push-pull holes, the pair of push-pull holes are arranged at an interval in the third direction, and the pair of push-pull holes are configured for inserting a tool, so as to pull out the elastic sampling portion from between the first protrusion and the second protrusion in the second direction.

One pair of push-pull holes are provided in the elastic sampling portion for inserting the tool, so that the elastic sampling portion is deformed in the third direction, to be pulled out from between the first protrusion and the second protrusion.

According to some embodiments of the present application, the elastic sampling portion includes a first arm and a second arm, one end of the first arm is connected to one end of the second arm, a gap is provided between the first arm and the second arm in the third direction, the first arm is configured for abutting against the first protrusion, and the second arm is configured for abutting against the second protrusion.

The elastic sampling portion abuts against the first protrusion and the second protrusion through the first arm and the second arm, and an outer size of the elastic sampling portion in the third direction can be reduced through the gap between the first arm and the second arm, so that the configuration is simple and easy to implement.

According to some embodiments of the present application, the other end of the first arm is connected to the other end of the second arm, and the first arm and the second arm enclose the gap.

The elastic sampling portion is in a closed ring shape, and can be clamped between the first protrusion and the second protrusion through an elastic restoring force of the ring-shaped elastic sampling portion, so that the elastic sampling portion is fixed to the plug-in structure in the first direction and the third direction, thus the elastic sampling portion has a simple configuration, and can still maintain good elasticity after used for a long time.

According to some embodiments of the present application, the other end of the first arm and the other end of the second arm are arranged at an interval to form an opening, the opening being in communication with the gap.

The opening is formed between the first arm and the second arm of the elastic sampling portion, the opening being in communication with the gap. When the first arm and the second arm are deformed in the third direction, the opening can be narrowed in the third direction, so that outer sizes of the first arm and the second arm in the third direction are reduced to a greater extent, and other protrusions can also be inserted between the first arm and the second arm from the opening, so that the first arm and the second arm firmly abut against the first protrusion and the second protrusion, respectively.

According to some embodiments of the present application, the first arm is provided with a first stopping portion, the first stopping portion being configured for abutting against the first protrusion, to restrain the first arm from moving in the first direction; and/or

the second arm is provided with a second stopping portion, the second stopping portion being configured for abutting against the second protrusion, to restrain the second arm from moving in the first direction.

The first stopping portion and the second stopping portion can restrain a position at which the sampling terminal is inserted into the plug-in structure in the first direction, so as to prevent the sampling terminal from being separated from the plug-in structure due to excessive insertion in the first direction.

According to some embodiments of the present application, the plug-in structure further includes a third protrusion arranged on the first surface, the third protrusion is separated from both the first protrusion and the second protrusion, and the first arm and the second arm are configured for clamping the third protrusion.

The third protrusion abuts between the first arm and the second arm, so that the first arm can firmly abut against the first protrusion, and the second arm can firmly abut against the second protrusion, which improves the sampling reliability.

According to some embodiments of the present application, the third protrusion is provided with two third limiting portions, the two third limiting portions being configured for abutting against the first arm and the second arm, respectively, so as to restrain the first arm and the second arm from moving in the second direction.

The two third limiting portions abut against the first arm and the second arm, respectively, so as to prevent the sampling terminal in a sampling state from being separated from the plug-in structure in the second direction.

According to some embodiments of the present application, the battery further includes a circuit board configured for being electrically connected to the sampling terminal, the circuit board including a main body and a connection portion, the connection portion being of a cantilever structure with one end connected to the main body, and the sampling terminal being connected to the connection portion.

The sampling terminal is connected to the main body of the circuit board through the cantilever structure, so that the sampling terminal can move relative to the circuit board, which avoids damaging the main body of the circuit board when the sampling terminal is pulled out in the second direction.

In a second aspect, an embodiment of the present application provides a power consuming device, including a battery according to an embodiment of the present application in the first aspect, the battery being configured for providing electric energy.

In a third aspect, an embodiment of the present application provides a method for manufacturing a battery, including:
providing a battery cell;
providing a sampling terminal, the sampling terminal being configured for acquiring a voltage or a temperature of the battery cell;
providing a busbar component configured for being electrically connected to the battery cell, where the busbar component includes a plug-in structure configured for the sampling terminal to be inserted in a first direction to connect with the busbar component, and the plug-in structure is configured for the sampling terminal to be pulled out in a second direction so as to be separated from the busbar component, the first direction intersecting the second direction; and
inserting the sampling terminal into the plug-in structure.

In a fourth aspect, an embodiment of the present application provides an apparatus for manufacturing a battery, including:
a first provision device for providing a battery cell;
a second provision device for providing a sampling terminal, the sampling terminal being configured for acquiring a voltage or a temperature of the battery cell;
a third provision device for providing a busbar component configured for being electrically connected to the battery cell, where the busbar component includes a plug-in structure configured for the sampling terminal to be inserted in a first direction to connect with the busbar component, and the plug-in structure is configured for the sampling terminal to be pulled out in a second direction so as to be separated from the busbar component, the first direction intersecting the second direction; and
a mounting module for inserting the sampling terminal into the plug-in structure.

Some of the additional aspects and advantages of the present application will be set forth in the following description, and some will become apparent from the following description, or be learned by practice of the present application.

### Brief Description of the Drawings

In order to more clearly describe the technical solutions in the embodiments of the present application, the accompanying drawings to be used in the embodiments will be described briefly below. It should be understood that the following accompanying drawings illustrate only certain embodiments of the present application, and are therefore not to be deemed as a limitation on the scope. For those of ordinary skill in the art, other relevant accompanying drawings may also be derived from these accompanying drawings without creative efforts.
FIG. 1 is a simplified schematic diagram of a vehicle according to an embodiment of the present application;
FIG. 2 is a schematic structural diagram of a battery of the vehicle in FIG. 1;
FIG. 3 is a partial enlarged view of part A in FIG. 2;
FIG. 4 is a sectional view of FIG. 3 (illustrating one type of sampling terminal) taken along line B-B;
FIG. 5 is a schematic structural diagram of one type of busbar component;
FIG. 6 is a partial enlarged view of part C in FIG. 5;
FIG. 7 is a schematic structural diagram of another type of busbar component;
FIG. 8 is a schematic structural diagram of one type of sampling terminal according to some embodiments of the present application;
FIG. 9 is a schematic structural diagram of another type of sampling terminal according to some embodiments of the present application;
FIG. 10 is a schematic structural diagram of a third type of sampling terminal according to some embodiments of the present application;
FIG. 11 is a schematic structural diagram of one type of busbar component matching the sampling terminal in FIG. 10;
FIG. 12 is a schematic diagram showing the matching of the sampling terminal shown in FIG. 10 and the busbar component shown in FIG. 11;
FIG. 13 is a schematic structural diagram of still yet another type of busbar component matching the sampling terminal shown in FIG. 10; and
FIG. 14 is a schematic diagram showing the matching of the sampling terminal shown in FIG. 10 and the busbar component shown in FIG. 13.

List of reference signs: 1000 - Vehicle; 100 - Battery; 10 - Battery cell; 11 - Housing; 12 - Cap; 20 - Busbar component; 21 - Body; 211 - First surface; 212 - Second surface; 213 - First through hole; 214 - Second through hole; 215 - Third through hole; 216 - Middle section; 22 - Plug-in structure; 221 - First protrusion; 2211 - First top wall; 22111 - First limiting portion; 2212 - First side wall; 22121 - First abutting portion; 2213 - Third side wall; 2214 - First cavity; 222 - Second protrusion; 223 - Third protrusion; 2231 - Third abutting portion; 2232 - Third limiting portion; 30 - Sampling terminal; 31 - Base portion; 32 - Elastic sampling portion; 321 - First arm; 3211 - First outer side surface; 3212 - First stopping portion; 322 - Second arm; 3221 - Second outer side surface; 3222 - Second stopping portion; 323 - Opening; 33 - Gap; 34 - Push-pull hole; 40 - Circuit board; 41 - Main body; 42 - Connection portion; 200 - Controller; 300 - Motor; X - First direction; Z - Second direction; Y - Third direction.

### Detailed Description of Embodiments

In order to make the objectives, technical solutions, and advantages of the embodiments of the present application clearer, the technical solutions in the embodiments of the present application will be described clearly below with reference to the accompanying drawings in the embodiments of the present application. Obviously, the embodiments described are some of, rather than all of, the embodiments of the present application. All other embodiments obtained by those of ordinary skill in the art based on the embodiments of the present application without creative efforts shall fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing the specific embodiments, but are not intended to limit the present application. The terms "comprising/including", "provided with", and any variations thereof in the description and claims, as well as the brief description of the drawings described above of the present application are intended to cover non-exclusive inclusions. The terms "first", "second", etc. in the description and claims or the accompanying drawings described above of the present application are configured for distinguishing between different objects, rather than describing a specific order or a primary-secondary relationship.

In the present application, the phrase "embodiment" mentioned means that the specific features, structures, or characteristics described with reference to the embodiments may be encompassed in at least one embodiment of the present application. The phrase in each place in the description does not necessarily refer to the same embodiment, or an independent or alternative embodiment exclusive of other embodiments. Those skilled in the art should understand explicitly and implicitly that the embodiments described in the present application may be combined with other embodiments.

In the description of the present application, it should be noted that the terms "mounted", "connected", "connection", and "attached" should be interpreted in a broad sense unless explicitly defined and limited otherwise. For example, it may be a fixed connection, a detachable connection, or an integral connection. It may be a direct connection, an indirect connection through an intermediate medium, or internal communication between two elements. For those of ordinary skill in the art, the specific meanings of the terms described above in the present application may be understood according to specific circumstances.

"A plurality of' appearing in the present application means two or more (including two).

In the present application, a battery cell may include a lithium ion secondary battery, a lithium ion primary battery, a lithium-sulfur battery, a sodium-lithium ion battery, a sodium ion battery, a magnesium ion battery, etc., which is not limited in the embodiments of the present application. The battery cell may be cylindrical, flat, cuboid, etc., which is not limited in the embodiments of the present application. The battery cell is generally classified into three types according to packaging manners: a cylindrical battery cell, a prismatic battery cell, and a pouch battery cell.

The battery mentioned in the embodiments of the present application refers to a single physical module including one or more battery cells, to provide a higher voltage and a larger capacity. For example, the battery mentioned in the present application may include a battery module, a battery pack, etc. The battery generally includes a case for packaging one or more battery cells, the case being capable of preventing liquid or other foreign matters from affecting the charging or discharging of the battery cells.

The battery cell includes an electrode assembly and an electrolyte, the electrode assembly being composed of a positive plate, a negative plate, and a separator. The running of the battery cell relies mainly on movement of metal ions between the positive plate and the negative plate. The positive plate includes a positive current collector and a positive active material layer. The positive active material layer is applied on a surface of the positive current collector; a portion, not applied with the positive active material layer, of the positive current collector protrudes from a portion, applied with the positive active material layer, of the positive current collector; and the portion, not applied with the positive active material layer, of the positive current collector serves as a positive tab. With a lithium ion battery as an example, the positive current collector may be made of aluminum, and a positive active material may be lithium cobalt oxide, lithium iron phosphate, ternary lithium, lithium manganate, etc. The negative plate includes a negative current collector and a negative active material layer. The negative active material layer is applied on a surface of the negative current collector; a portion, not applied with the negative active material layer, of the negative current collector protrudes from a portion, applied with the negative active material layer, of the negative current collector; and the portion, not applied with the negative active material layer, of the negative current collector serves as a negative tab. The negative current collector may be made of copper, and a negative active material may be carbon, silicon, etc. In order to ensure that no fusing occurs when a large current passes, a plurality of positive tabs are provided and stacked together, and a plurality of negative tabs are provided and stacked together. The separator may be made from polypropylene (PP), polyethylene (PE), etc. In addition, the electrode assembly may be of a wound structure or a laminated structure, which is not limited in the embodiments of the present application.

The battery cell further includes a current collecting member, the current collecting member being configured for electrically connecting the tab and an electrode terminal of the battery cell, so as to convey electric energy from the electrode assembly to the electrode terminal, and to the outside of the battery cell via the electrode terminal. The plurality of battery cells are electrically connected to one another through a busbar component, so that the plurality of battery cells are connected in series, in parallel or in series and parallel.

The battery further includes a sampling terminal and a battery management system, the sampling terminal being connected to the busbar component and configured for acquiring information of the battery cell, such as a voltage, a temperature, etc. The sampling terminal transmits the acquired information of the battery cell to the battery management system. When detecting that the information of the battery cell exceeds a normal range, the battery management system will limit the output power of the battery, so as to realize safety protection.

In the related art, the sampling terminal is generally inserted into the busbar component along a surface of the busbar component, and a pull-out direction is parallel with and opposite to an insertion direction, that is, an insertion path and a pull-out path of the sampling terminal are the same. After the battery is used for a long time, the sampling terminal may be aged or damaged, and thus cannot effectively acquire the information of the battery cell. Therefore, after the sampling terminal is aged or damaged, the sampling terminal is required to be detached by means of a removal tool, and the detached sampling terminal is replaced with a new sampling terminal. After being assembled, the battery has a compact structure, resulting in a limited available space. Especially, a circuit board has been fixedly connected to a rear portion of the sampling terminal through other components, so that an original insertion path of the sampling terminal is invalid, and the sampling terminal cannot be pulled out along the original insertion path for replacement. If the sampling terminal is pulled out along the original path by force, the circuit board connected to the rear portion of the sampling terminal will be damaged.

After research, the inventors have found that in an existing battery configuration, a busbar component is connected to an electrode terminal of a battery cell, and one side of the busbar component away from the battery cell, has an enough space for detaching and replacing a sampling terminal.

Based on the concept described above, the inventors of the present application have proposed a technical solution, that is, a space on the side of a busbar component away from a battery cell is utilized for detaching a sampling terminal, so that the sampling terminal is easy to detach and replace.

It is to be understood that the battery cells described in the embodiments of the present application may directly supply power to a power consuming device, or are connected in parallel or in series to form a battery, so as to supply power to various power consuming devices in the form of the battery.

It is to be understood that the power consuming device described in the embodiment of the present application, using the battery cells or applicable to the battery may be in various forms, for example, a mobile phone, a portable apparatus, a laptop, an electric motorcycle, an electric vehicle, a ship, a spacecraft, an electric toy, an electric tool, etc. For example, the spacecraft includes an airplane, a rocket, a space shuttle, a spaceship, etc. The electric toy includes a fixed or mobile electric toy, such as a game console, an electric vehicle toy, an electric ship toy, an electric airplane toy, etc. The electric tool includes an electric tool for metal cutting, an electric tool for grinding, an electric tool for assembling, an electric tool for railways, etc., such as an electric drill, an electric grinder, an electric wrench, an electric screwdriver, an electric hammer, an electric impact drill, a concrete vibrator, and an electric planer.

The battery cell and the battery described in the embodiments of the present application are not only applicable to the power consuming device described above, but also applicable to all power consuming devices using battery cells and batteries. However, in order to make the description concise, the following embodiments are all described with an electric vehicle as an example.

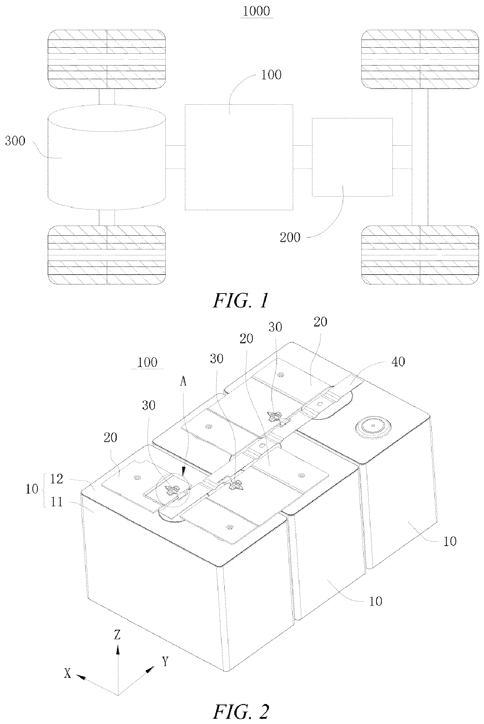

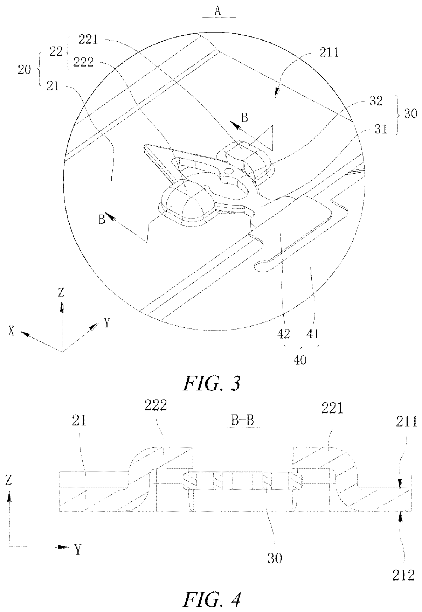

FIG. 1 is a simplified schematic diagram of a vehicle according to an embodiment of the present application; FIG. 2 is a schematic structural diagram of a battery of the vehicle in FIG. 1; FIG. 3 is a partial enlarged view of part A in FIG. 2; and FIG. 4 is a sectional view of FIG. 3 taken along line B-B.

As shown in FIG. 1, a vehicle 1000 is internally provided with a battery 100, a controller 200, and a motor 300. For example, the battery 100 may be arranged at the bottom, the front, or the rear of the vehicle 1000. The vehicle 1000 may be a fuel vehicle, a gas vehicle, or a new energy vehicle. The new energy vehicle may be a battery electric vehicle, a hybrid electric vehicle, an extended-range vehicle, etc.

In some embodiments of the present application, the battery 100 may be configured for supplying electric energy to the vehicle 1000. For example, the battery 100 may be used as a power source for operating the vehicle 1000. The controller 200 is configured for controlling the battery 100 to supply electric energy to the motor 300, for example, for meeting the working power requirements during starting, navigating, and traveling of the vehicle 1000.

In other embodiments, the battery 100 may not only serve as the power source for operating the vehicle 1000, but may also serve as a power source for driving the vehicle 1000, replacing or partially replacing fuel or natural gas, to provide driving power for the vehicle 1000.

The battery 100 mentioned in the embodiments of the present application refers to a single physical module including one or more battery cells, to provide a higher voltage and a larger capacity. For example, the battery 100 is formed by connecting a plurality of battery cells 10 in series or in parallel.

As shown in FIG. 2, the battery 100 includes a plurality of battery cells 10, a busbar component 20, a sampling terminal 30, a circuit board 40, and a case (not shown). The plurality of battery cells 10 are connected in parallel, or in series, or in series and parallel, to realize a high-voltage output, and the plurality of battery cells 10, the busbar component 20, the sampling terminal 30, and the circuit board 40 are assembled and then placed inside the case.

Each of the battery cells 10 includes a housing 11, a cap 12, two electrode terminals (not shown), and an electrode assembly (not shown). The housing 11 may be in a hexahedral shape or other shapes, and an accommodation cavity is formed inside the housing 11 for accommodating the electrode assembly and an electrolyte. One end of the housing 11 is provided with an opening, such that the electrode assembly may be placed inside the housing 11 through the opening. The housing 11 may be made of a metal material, such as aluminum, an aluminum alloy, or nickel-plated steel. The electrode assembly is arranged inside the housing 11. The cap 12 is provided with two electrode lead-out holes, the two electrode terminals being arranged in the two electrode lead-out holes of the cap 12. One of the two electrode terminals is a positive electrode terminal, and the other is a negative electrode terminal. The electrode assembly includes two tabs,one of which is a positive tab, and the other of which is a negative tab. The positive electrode terminal is connected to the positive tab of the electrode assembly, and the negative electrode terminal is connected to the negative tab of the electrode assembly.

In some embodiments of the present application, the housing 11 is cuboid, an opening is provided in one side of the housing 11 in a Z direction, the opening is closed by the cap 12 at one side of the housing 11 in the Z direction, and the two electrode terminals are both arranged at the cap 12, that is, located at the same side of the battery cell 10 in the Z direction.

In other embodiments, the housing 11 may also be cylindrical, etc.

The busbar component 20 is configured for being electrically connected to the battery cell 10. Specifically, the busbar component 20 has a thickness extending in the Z direction, and the busbar component 20 is connected to two electrode terminals having opposite polarities of two battery cells 10 arranged adjacent to each other, so that the two battery cells 10 are connected in series. Alternatively, the busbar component 20 is connected to electrode terminals having the same polarity of the two battery cells 10 arranged adjacent to each other, so that the two battery cells 10 are connected in parallel. Alternatively, the busbar component 20 is connected to an electrode terminal located at an output end, so that the battery 100 is connected to an external output interface.

Information such as a voltage and a temperature on the busbar component 20 can reliably reflect a working state of the battery cell 10 connected thereto, and the working state of the battery cell 10 can be reliably monitored by sampling the busbar component 20. The sampling terminal 30 abuts against a surface of the busbar component 20, to sample a voltage or a temperature of the battery cell 10. A main body 41 of the circuit board 40 is configured for receiving an electrical signal representing the voltage or the temperature acquired by the sampling terminal 30, and transmitting the electrical signal to the battery management system (not shown), so that the battery management system can analyze and determine whether the battery cell 10 is in a normal working state.

As shown in FIG. 3, the circuit board 40 includes the main body 41 and a connection portion 42, one end of connection portion 42 is connected to the main body 41, and the other end thereof is electrically connected to the sampling terminal 30.

In some embodiments of the present application, the connection portion 42 is of a cantilever structure with one end connected to the main body 41, two ends of the cantilever structure are electrically connected to the main body 41 and the sampling terminal 30, respectively, so that the sampling terminal 30 can move relative to the main body 41, which avoids damaging the main body 41 when the sampling terminal 30 is pulled out in a second direction Z.

As shown in FIG. 3, the busbar component 20 includes a body 21 and a plug-in structure 22, the plug-in structure 22 is arranged at the body 21, the plug-in structure 22 is configured for the sampling terminal 30 to be inserted in a first direction X to connect with the busbar component 20, and the plug-in structure 22 is configured for the sampling terminal 30 to be pulled out in the second direction Z so as to be separated from the busbar component 20, the first direction X intersecting the second direction Z.

Since a direction in which the sampling terminal 30 is inserted into the plug-in structure 22 is different from a direction in which the sampling terminal is pulled out from the plug-in structure 22, the sampling terminal 30 is not required to be pulled out in a direction opposite to an original insertion direction when the sampling terminal is detached, and the sampling terminal 30 can be pulled out in a direction different from the insertion direction by utilizing a large space around the busbar component 20, so that the sampling terminal 30 is easy to detach and replace.

As shown in FIG. 3, in some embodiments of the present application, the battery cell 10 has a lengthwise direction extending in the first direction X, and a widthwise direction extending in a third direction Y; a height direction of the battery cell and a thickness direction of the body 21 both extend in the second direction Z; and the first direction X, the second direction Z, and the third direction Y are perpendicular to one another.

In other embodiments, the third direction Y is perpendicular to the first direction X, the first direction X may be perpendicular to the second direction Z or not, and the second direction Z may be inconsistent with the thickness direction of the body 21.

For example, the second direction Z is perpendicular to the first direction X, and the second direction Z and the third direction Y are arranged forming an included angle of 45°. Also, the second direction Z and the first direction X are arranged forming an included angle of 45°, and the second direction Z is perpendicular to the third direction Y.

The body 21 has the thickness direction extending in the Z direction, and the body 21 is arranged at one side, configured with the electrode terminal, of the battery cell 10, so as to be electrically connected to the electrode terminal of the battery cell 10.

As shown in FIGS. 3 and 4, two sides of the body 21 in the Z direction are provided with a first surface 211 and a second surface 212, respectively, where the first surface 211 is a surface away from the battery cell 10, and the second surface 212 is a surface facing the battery cell 10.

The plug-in structure 22 includes a first protrusion 221 and a second protrusion 222 arranged on the first surface 211, the first protrusion 221 and the second protrusion 222 are arranged at an interval in the third direction Y, the sampling terminal 30 is configured for being inserted between the first protrusion 221 and the second protrusion 222, and the third direction Y is perpendicular to the first direction X and intersects the second direction Z.

The sampling terminal 30 includes a base portion 31 and an elastic sampling portion 32; one end of the base portion 31 in the first direction X is connected to the connection portion 42 of the circuit board 40, and the other end thereof is connected to the elastic sampling portion 32; and the elastic sampling portion 32 is configured for being inserted between the first protrusion 221 and the second protrusion 222, and pressed by the first protrusion 221 and the second protrusion 222.

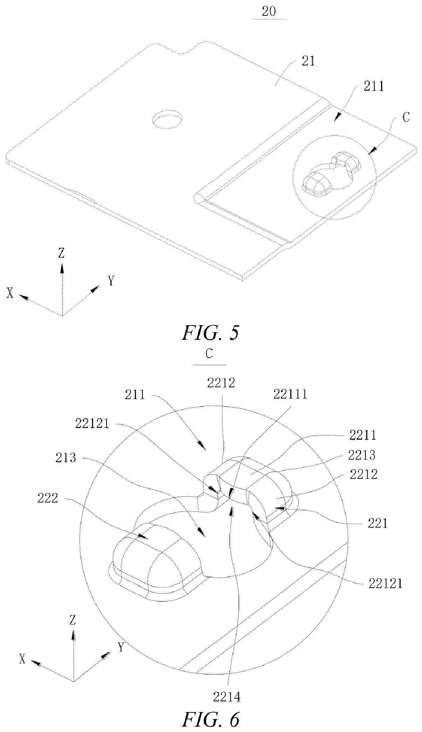

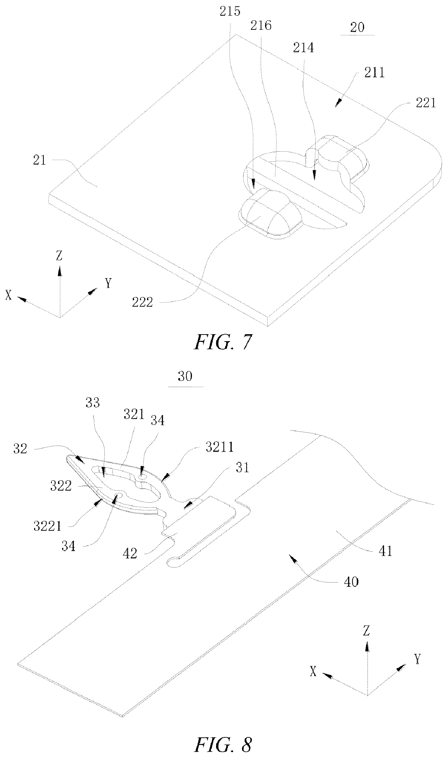

FIG. 5 is a schematic structural diagram of one type of busbar component; FIG. 6 is a partial enlarged view of part C in FIG. 5; and FIG. 7 is a schematic structural diagram of another type of busbar component.

In the plug-in structure 22, the first protrusion 221 and the second protrusion 222 are oppositely arranged in the third direction Y, and the second protrusion 222 has the same configuration as the first protrusion 221. The configuration of the plug-in structure 22 is described below only with the configuration of the first protrusion 221 as an example.

As shown in FIGS. 5 and 6, in some embodiments of the present application, the first protrusion 221 includes a first top wall 2211 and two first side walls 2212, the two first side walls 2212 are oppositely arranged in the first direction X, two ends of each of the first side walls 2212 are connected to the body 21 and the first top wall 2211, respectively, at least part of the first top wall 2211 is configured as a first limiting portion 22111, and one side, close to the second protrusion 222 in the third direction Y, of each of the first side walls 2212 is configured as a first abutting portion 22121. The first protrusion 221 further includes a third side wall 2213, where the third side wall 2213 is located at one side of the first protrusion 221 away from the second protrusion 222 in the third direction Y; the third side wall 2213 is connected to the body 21, the first top wall 2211, and the two first side walls 2212, respectively; and the first top wall 2211, the two first side walls 2212, and the third side wall 2213 enclose a first cavity 2214.

Similarly, the second protrusion 222 includes a second top wall (not marked in the figure), and two second side walls (not marked in the figure), where the two second side walls are oppositely arranged in the first direction X, two ends of each of the second side walls are connected to the body 21 and the second top wall, respectively, at least part of the second top wall is configured as a second limiting portion (not marked in the figure), and one side, close to the first protrusion in the third direction Y, of each of the second side walls is configured as a second abutting portion (not marked in the figure). The second protrusion 222 further includes a fourth side wall (not shown in the figure), where the fourth side wall is located at one side of the second protrusion 222 away from the first protrusion 221 in the third direction Y; the fourth side wall is connected to the body 21, the second top wall, and the two second side walls, respectively; and the second top wall, the two second side walls, and the fourth side wall enclose a second cavity (not shown in the figure).

Through the structure described above, the first protrusion 221 and the second protrusion 222 are each of a raised structure formed on the first surface 211 of the body 21 and provided with an opening, and an opening of the first protrusion 221 and an opening of the second protrusion 222 are oppositely arranged in the third direction Y. Through this structural form, the first limiting portion 22111 and the first abutting portion 22121 can be formed correspondingly, and processing is facilitated.

In some other embodiments of the present application, the first protrusion 221 may not include the third side wall 2213, and the second protrusion 222 may not include the fourth side wall. In other words, the first protrusion 221 and the second protrusion 222 are each of the raised structure formed on the first surface 211 of the body 21. Two sides of the first protrusion 221 in the third direction Y are each provided with an opening, and two sides of the second protrusion 222 in the third direction Y are each provided with an opening. Through this structural form, the first limiting portion 22111 and the first abutting portion 22121 can be formed correspondingly, and processing is also facilitated.

In the solution described above, a plurality of processes may also be used for forming the first protrusion 221 and the second protrusion 222 on the first surface 211 of the body 21.

In some embodiments of the present application, the busbar component 20 is a metal sheet, and the first protrusion 221 and the second protrusion 222 are both formed through a stamping process, so that the configuration is simple and easy to implement.

As shown in FIG. 6, in some embodiments, the body 21 is provided with a first through hole 213, the first protrusion 221 and the second protrusion 222 are arranged at an edge of the first through hole 213 in the third direction Y, and the first through hole 213 is a fabrication hole facilitating stamping of the first protrusion 221 and the second protrusion 222.

As shown in FIG. 7, in some other embodiments, the body 21 is provided with a second through hole 214 and a third through hole 215, the second through hole 214 and the third through hole 215 being arranged at an interval in the third direction Y, and the body 21 is provided with a middle section 216 located between the second through hole 214 and the third through hole 215. The first protrusion 221 is located at an edge of the second through hole 214 away from the third through hole 215, and the second protrusion 222 is located at an edge of the third through hole 215 away from the second through hole 214.

In other embodiments, the first protrusion 221 and the second protrusion 222 may also be formed in other manners. For example, the first protrusion 221 and the second protrusion 222 may be independent components that are welded or connected through a threaded member to the first surface 211.

In the solution described above, the first protrusion 221 includes two first abutting portions 22121 arranged at an interval in the first direction X, and the second protrusion 222 includes two second abutting portions arranged at an interval in the first direction X; and the two first abutting portions 22121 and the two second abutting portions jointly abut against the elastic sampling portion 32, to restrain the elastic sampling portion 32 from moving in the third direction Y, so that two ends of the elastic sampling portion 32 in the third direction Y firmly abut against the plug-in structure 22. The first protrusion 221 includes the first limiting portion 22111, the second protrusion 222 includes the second limiting portion, and the first limiting portion 22111 and the second limiting portion abut against the elastic sampling portion 32 jointly, so as to restrain the elastic sampling portion 32 from moving in the second direction Z, which prevents the elastic sampling portion 32 from being separated from the plug-in structure 22 in the second direction Z under working conditions such as external shaking, vibration, and impact.

In some other embodiments of the present application, various configurations may be used for forming two first abutting portions 22121 and two second abutting portions, as well as the first limiting portion 22111 and the second limiting portion.

For example, the first protrusion 221 may be replaced with two fourth protrusions, the two fourth protrusions are arranged at an interval in the first direction X, and each of the fourth protrusions is provided with one first abutting portion 22121. The second protrusion 222 is replaced with two fifth protrusions, the two fifth protrusions are arranged at an interval in the first direction X, and each of the fifth protrusions is provided with one second abutting portion.

FIG. 8 is a schematic structural diagram of one type of sampling terminal according to some embodiments of the present application.

Based on the configuration of the plug-in structure 22 described above, the elastic sampling portion 32 inserted between the first protrusion 221 and the second protrusion 222 may also have various configurations.

As shown in FIGS. 7 and 8, the elastic sampling portion 32 includes a first arm 321 and a second arm 322, one end of the first arm 321 being connected to one end of the second arm 322. In the third direction Y, a gap 33 is provided between the first arm 321 and the second arm 322, the first arm 321 is configured for abutting against the first abutting portion 22121 of the first protrusion 221, and the second arm 322 is configured for abutting against the second abutting portion of the second protrusion 222.

When the elastic sampling portion 32 is inserted between the first protrusion 221 and the second protrusion 222 in the first direction X, the two first abutting portions 22121 and the two second abutting portions press the elastic sampling portion 32 in the third direction Y jointly. An outer size of the elastic sampling portion 32 in the third direction Y can be reduced by narrowing the gap 33, and the elastic sampling portion abuts between the first protrusion 221 and the second protrusion 222 through elasticity.

In the solution described above, the elastic sampling portion 32 has a sampling state in which the elastic sampling portion 32 is pressed between the first protrusion 221 and the second protrusion 222, and a taken-out state in which the outer size of the elastic sampling portion in the third direction Y is reduced when the elastic sampling portion is clamped with a tool.

Specifically, the elastic sampling portion 32 of the sampling terminal 30 includes a first outer side surface 3211 and a second outer side surface 3221 opposite each other in the third direction Y. The first outer side surface 3211 is a side surface of the first arm 321 away from the second arm 322 in the third direction Y, and the second outer side surface 3221 is a side surface of the second arm 322 away from the first arm 321 in the third direction Y. The first outer side surface 3211 is configured for abutting against the two first abutting portions 22121, and the second outer side surface 3221 is configured for abutting against the two second abutting portions, so as to restrict the elastic sampling portion 32 from moving in the third direction Y, which ensures that the elastic sampling portion 32 in the sampling state reliably abuts against the plug-in structure 22.

Further, the first outer side surface 3211 is a cambered surface arched towards the first protrusion 221, and the second outer side surface 3221 is a cambered surface arched towards the second protrusion 222.

Through the structure described above, a middle cambered section of the first outer side surface 3211 is clamped between the two first abutting portions 22121, and a middle cambered section of the second outer side surface 3221 is clamped between the two second abutting portions, so as to further restrain a position of the elastic sampling portion 32 in the first direction X while the elastic sampling portion 32 is restrained from moving in the third direction Y, and to ensure that the elastic sampling portion 32 will not shake in the first direction X after being inserted in place.

In the sampling state, the first arm 321 of the elastic sampling portion 32 abuts against the first limiting portion 22111 of the first protrusion 221, and the second arm 322 abuts against the second limiting portion of the second protrusion 222, so as to prevent the elastic sampling portion from being separated from the plug-in structure 22 in the second direction Z. When clamped with the tool, the elastic sampling portion 32 may be deformed from the sampling state to the taken-out state, so that the elastic sampling portion is taken out from between the first protrusion 221 and the second protrusion 222 in the second direction Z.

As shown in FIG. 8, in some embodiments of the present application, the elastic sampling portion 32 is provided with a pair of push-pull holes 34, the pair of push-pull holes 34 are arranged at an interval in the third direction Y, and the pair of push-pull holes 34 are configured for inserting the tool, so as to pull out the elastic sampling portion 32 from between the first protrusion 221 and the second protrusion 222 in the second direction Z.

Specifically, the first arm 321 and the second arm 322 are each provided with one push-pull hole 34. The two push-pull holes 34 are arranged at an interval in the third direction Y, an axial direction of each of the push-pull holes 34 extending in the second direction Z. One pair of push-pull holes 34 are provided in the elastic sampling portion 32, so that the tool can be inserted therein. The elastic sampling portion 32 is deformed in the third direction Y by manipulating the tool, so as to be pulled out from between the first protrusion 221 and the second protrusion 222. The tool may be sharp-nose pliers, tweezers, etc.

In other embodiments, the first outer side surface 3211 of the first arm 321 and the second outer side surface 3221 of the second arm 322 are each provided with a recess, and a pair of recesses are configured for inserting the tool, so as to pull out the elastic sampling portion 32 from between the first protrusion 221 and the second protrusion 222 in the second direction Z.

In the solution described above, one ends, away from the base portion 31, of the first arm 321 and the second arm 322 may be connected or not.

As shown in FIG. 8, in some embodiments of the present application, the other end of the first arm 321 is connected to the other end of the second arm 322, and the first arm 321 and the second arm 322 enclose the gap 33.

In other words, the elastic sampling portion 32 is in a closed ring shape, and can be clamped between the first protrusion 221 and the second protrusion 222 by utilizing an elastic restoring force of the ring-shaped elastic sampling portion 32, so that the elastic sampling portion is fixed to the plug-in structure 22 in the first direction X and the third direction Y, thus the elastic sampling portion has a simple configuration, and can still maintain good elasticity after used for a long time.

Based on the solution described above, the push-pull hole 34 is arranged at the maximum position of the gap 33 in the first direction X, so that the outer size of the elastic sampling portion 32 in the third direction Y can be significantly reduced, and the elastic sampling portion can be easily narrowed to be smaller than a distance between the first limiting portion 22111 and the second limiting portion, so that the elastic sampling portion is separated from the plug-in structure 22 in the second direction Z.

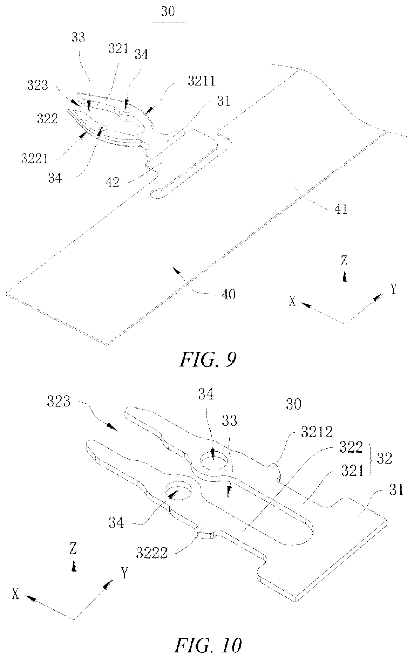

FIG. 9 is a schematic structural diagram of another type of sampling terminal according to some embodiments of the present application.

As shown in FIG. 9, in some other embodiments of the present application, the other end of the first arm 321 and the other end of the second arm 322 are arranged at an interval, to form an opening 323, the opening 323 being in communication with the gap 33.

As shown in FIG. 9, the opening 323 is formed between the first arm 321 and the second arm 322 of the elastic sampling portion 32, the opening 323 being in communication with the gap 33. When the first arm 321 and the second arm 322 are deformed in the third direction Y, the opening 323 can be narrowed in the third direction Y, so that outer sizes of the first arm 321 and the second arm 322 in the third direction Y are reduced to a greater extent, and other protrusions (for example, the third protrusion 223 described below) can be inserted between the first arm 321 and the second arm 322 from the opening 323, so that the first arm 321 and the second arm 322 elastically abut against the first protrusion 221 and the second protrusion 222, respectively.

In the solution described above, the other end of the first arm 321 may be connected to the other end of the second arm 322 or not, and an insertion position of the elastic sampling portion 32 relative to the plug-in structure 22 in the first direction X is realized through the first cambered outer side surface 3211 and the second cambered outer side surface 3221.

In other embodiments, contour shapes of the first outer side surface 3211 and the second outer side surface 3221 may not be limited, and the insertion position of the elastic sampling portion 32 relative to the plug-in structure 22 in the first direction X is limited by arranging some stopping portions on the elastic sampling portion 32 to abut against the plug-in structure 22 in the first direction X.

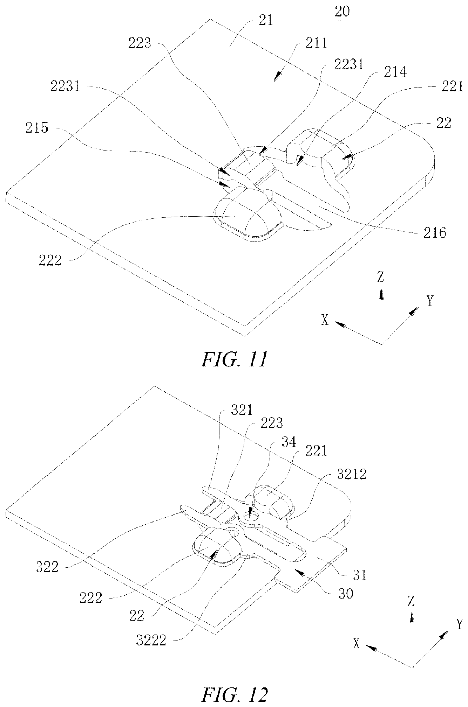

FIG. 10 is a schematic structural diagram of a third type of sampling terminal according to some embodiments of the present application; FIG. 11 is a schematic structural diagram of one type of busbar component matching the sampling terminal in FIG. 10; and FIG. 12 is a schematic diagram showing the matching of the sampling terminal shown in FIG. 10 and the busbar component shown in FIG. 11.

As shown in FIGS. 10, 11 and 12, in some embodiments of the present application, the first arm 321 is provided with a first stopping portion 3212, and the first stopping portion 3212 is configured for abutting against the first protrusion 221, so as to restrain the first arm 321 from moving in the first direction X. The second arm 322 is provided with a second stopping portion 3222, and the second stopping portion 3222 is configured for abutting against the second protrusion 222, so as to restrain the second arm 322 from moving in the first direction X.

The first stopping portion 3212 and the second stopping portion 3222 can restrain the position at which the sampling terminal 30 is inserted into the plug-in structure 22 in the first direction X, so as to prevent the sampling terminal 30 from being separated from the plug-in structure 22 due to excessive insertion in the first direction X.

In other embodiments, one of the first stopping portion 3212 and the second stopping portion 3222 may be used to restrain the sampling terminal 30 from moving in the first direction X.

Based on the sampling terminal 30 having the structure described above, the push-pull hole 34 may also be centrally arranged in the first direction X, so as to apply a force from the middle of the elastic sampling portion 32 for clamping. The other ends of the first arm 321 and the second arm 322 are unfolded, to be separated from the third protrusion 223 described below, so that the sampling terminal is easily separated from the plug-in structure 22 in the second direction Z.

In the solution described above, when the opening 323 is formed between the other end of the first arm 321 and the other end of the second arm 322, the plug-in structure 22 may have other configurations, to increase an abutting force between the elastic sampling portion 32 and the plug-in structure 22, so as to ensure that the sampling terminal 30 abuts against the busbar component 20 under pressure, and to reliably sample the temperature or the voltage of the busbar component 20.

As shown in FIGS. 11 and 12, in some embodiments of the present application, the plug-in structure 22 further includes the third protrusion 223 arranged on the first surface 211, the third protrusion 223 is separated from both the first protrusion 221 and the second protrusion 222, and the first arm 321 and the second arm 322 are configured for clamping the third protrusion 223.

Since the third protrusion 223 abuts between the first arm 321 and the second arm 322, an acting force towards the first protrusion 221 can be applied to the first arm 321, and an acting force towards the second protrusion 222 can be applied to the second arm 322, so that the first arm 321 firmly abuts against the first protrusion 221, and the second arm 322 firmly abuts against the second protrusion 222, which improves the sampling reliability.

Specifically, the third protrusion 223 is provided with two third abutting portions 2231, and the two third abutting portions 2231 are configured for abutting against the first arm 321 and the second arm 322, respectively, so as to unfold the first arm 321 and the second arm 322 in the third direction Y.

Based on the specific configuration of the plug-in structure 22 described above, the first protrusion 221 may be provided with only one first abutting portion 22121, and the second protrusion 222 may be provided with only one second abutting portion. One first abutting portion 22121 and one second abutting portion press the sampling terminal 30 in the third direction Y, to restrain the sampling terminal 30 from displacing in the third direction Y.

Based on the plug-in structure 22 having the structure described above, the third protrusion 223 may be formed in various manners.

As shown in FIG. 11, in some embodiments of the present application, a middle section 216 between the second through hole 214 and the third through hole 215 of the body 21 protrudes towards the first surface 211, to form the third protrusion 223.

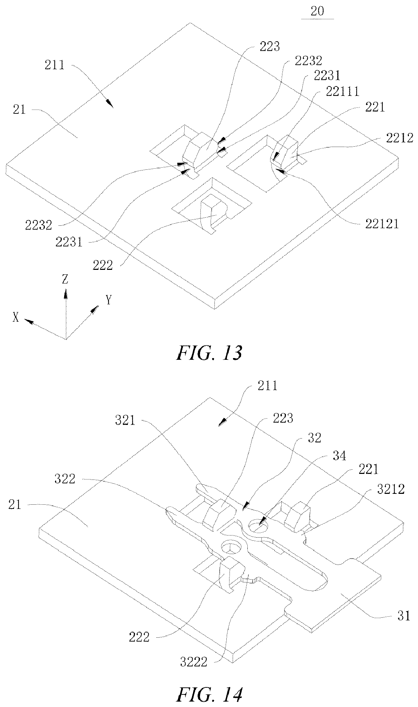

FIG. 13 is a schematic structural diagram of still yet another type of busbar component matching the sampling terminal shown in FIG. 10; and FIG. 14 is a schematic diagram showing the matching of the sampling terminal shown in FIG. 10 and the busbar component shown in FIG. 13.

As shown in FIG. 13, in some other embodiments of the present application, the third protrusion 223 may be of a separate raised structure or a flanging structure.

In the solution described above, the third protrusion 223 is also provided with a limiting portion for preventing the elastic sampling portion 32 from being separated from the plug-in structure 22 in the second direction Z.

As shown in FIGS. 13 and 14, in some embodiments of the present application, the third protrusion 223 is provided with two third limiting portions 2232, and the two third limiting portions 2232 are configured for abutting against the first arm 321 and the second arm 322, respectively, so as to restrain the first arm 321 and the second arm 322 from moving in the second direction Z.

The two third limiting portions 2232 abut against the first arm 321 and the second arm 322, respectively, so as to prevent the sampling terminal 30 in the sampling state from being separated from the plug-in structure 22 in the second direction Z.

In the solution described above, the first protrusion 221 and the second protrusion 222 are of raised structures formed through stamping, and the third protrusion 223 is formed through the middle section 216 or of the flanging structure. The third protrusion 223 is located at one sides, away from the base portion 31 in the first direction X, of the first protrusion 221 and the second protrusion 222.

In other embodiments, the third protrusion 223 may also be arranged between the first protrusion 221 and the second protrusion 222 in the third direction Y; and the first protrusion 221, the second protrusion 222, and the third protrusion 223 are all of flanging structures.

It is to be understood that in the plug-in structure 22 described above in various forms, a limiting portion may also be separately formed on another protrusion, so as to restrain the first arm 321 and the second arm 322 from moving in the second direction Z, and a position for forming the limiting portion is not limited to the first protrusion 221, the second protrusion 222, and the third protrusion 223.

Some embodiments of the present application provide a method for manufacturing a battery, including:
providing a battery cell 10;
providing a sampling terminal 30, the sampling terminal 30 being configured for acquiring a voltage or a temperature of the battery cell 10;
providing a busbar component 20 configured for being electrically connected to the battery cell 10, where the busbar component 20 includes a plug-in structure 22, the plug-in structure 22 is configured for the sampling terminal 30 to be inserted in a first direction X to connect with the busbar component 20, and the plug-in structure 22 is configured for the sampling terminal 30 to be pulled out in a second direction Z so as to be separated from the busbar component 20, the first direction X intersecting the second direction Z; and
inserting the sampling terminal 30 into the plug-in structure 22.

Some embodiments of the present application further provide an apparatus for manufacturing a battery 100, including:
a first provision device for providing a battery cell 10;
a second provision device for providing a sampling terminal 30, the sampling terminal 30 being configured for acquiring a voltage or a temperature of the battery cell 10;
a third provision device for providing a busbar component 20, where the busbar component 20 is configured for being electrically connected to the battery cell 10, the busbar component 20 includes a plug-in structure 22, the plug-in structure 22 is configured for the sampling terminal 30 to be inserted in a first direction X to connect with the busbar component 20, and the plug-in structure 22 is configured for the sampling terminal 30 to be pulled out in a second direction Z so as to be separated from the busbar component 20, the first direction X intersecting the second direction Z; and
a mounting module for inserting the sampling terminal 30 into the plug-in structure 22.

It should be noted that the features in the embodiments of the present application may be combined with one another without conflict.

The foregoing descriptions are merely preferred embodiments of the present application, but are not intended to limit the present application. For those skilled in the art, the present application may have various modifications and variations. Any modifications, equivalent substitutions, improvements, etc. made within the spirit and principle of the present application should be included within the scope of protection of the present application.

## Claims

1. A battery, comprising:
a battery cell;
a sampling terminal for acquiring a voltage or a temperature of the battery cell; and
a busbar component for being electrically connected to the battery cell, wherein the busbar component comprises a plug-in structure configured for the sampling terminal to be inserted in a first direction to connect with the busbar component, and the plug-in structure is configured for the sampling terminal to be pulled out in a second direction so as to be separated from the busbar component, the first direction intersecting the second direction.

2. The battery according to claim 1, wherein the busbar component further comprises a body comprising a first surface away from the battery cell, the plug-in structure comprises a first protrusion and a second protrusion arranged on the first surface, the first protrusion and the second protrusion are arranged at an interval in a third direction, the third direction being perpendicular to the first direction and intersecting the second direction, and the sampling terminal is configured for being inserted between the first protrusion and the second protrusion.

3. The battery according to claim 2, wherein the first protrusion is provided with a first limiting portion, the second protrusion is provided with a second limiting portion, and the first limiting portion and the second limiting portion are configured for abutting against the sampling terminal, so as to restrain the sampling terminal from moving in the second direction.

4. The battery according to claim 3, wherein the first protrusion is provided with two first abutting portions arranged at an interval in the first direction, the second protrusion is provided with two second abutting portions arranged at an interval in the first direction, and the two first abutting portions and the two second abutting portions are configured for abutting against the sampling terminal, so as to restrain the sampling terminal from moving in the third direction.

5. The battery according to claim 4, wherein the first protrusion comprises a first top wall and two first side walls, the two first side walls are oppositely arranged in the first direction, two ends of each of the first side walls are connected to the body and the first top wall, respectively, at least part of the first top wall is configured as the first limiting portion, and one side, close to the second protrusion in the third direction, of each of the first side walls is configured as the first abutting portion; and
the second protrusion comprises a second top wall and two second side walls, the two second side walls are oppositely arranged in the first direction, two ends of each of the second side walls are connected to the body and the second top wall, respectively, at least part of the second top wall is configured as the second limiting portion, and one side, close to the first protrusion in the third direction, of each of the second side walls is configured as the second abutting portion.

6. The battery according to claim 5, wherein the first protrusion further comprises a third side wall located at one side of the first protrusion away from the second protrusion in the third direction, the third side wall is connected to the body, the first top wall, and the two first side walls, respectively, and the first top wall, the two first side walls, and the third side wall enclose a first cavity; and
the second protrusion further comprises a fourth side wall located at one side of the second protrusion away from the first protrusion in the third direction, the fourth side wall is connected to the body, the second top wall, and the two second side walls, respectively, and the second top wall, the two second side walls, and the fourth side wall enclose a second cavity.

7. The battery according to any one of claims 4-6, wherein the sampling terminal comprises a first outer side surface and a second outer side surface opposite each other in the third direction, the first outer side surface is configured for abutting against the two first abutting portions, the second outer side surface is configured for abutting against the two second abutting portions, the first outer side surface is a cambered surface arched towards the first protrusion, and the second outer side surface is a cambered surface arched towards the second protrusion.

8. The battery according to any one of claims 2-7, wherein the body is provided with a through hole, and the first protrusion and the second protrusion are arranged at an edge of the through hole.

9. The battery according to any one of claims 2-7, wherein the sampling terminal comprises an elastic sampling portion configured for being inserted between and pressed by the first protrusion and the second protrusion.

10. The battery according to claim 9, wherein the elastic sampling portion is provided with a pair of push-pull holes, the pair of push-pull holes are arranged at an interval in the third direction, and the pair of push-pull holes are configured for inserting a tool, so as to pull out the elastic sampling portion from between the first protrusion and the second protrusion in the second direction.

11. The battery according to claim 9 or 10, wherein the elastic sampling portion comprises a first arm and a second arm, one end of the first arm is connected to one end of the second arm, a gap is provided between the first arm and the second arm in the third direction, the first arm is configured for abutting against the first protrusion, and the second arm is configured for abutting against the second protrusion.

12. The battery according to claim 11, wherein the other end of the first arm is connected to the other end of the second arm, and the first arm and the second arm enclose the gap.

13. The battery according to claim 11, wherein the other end of the first arm and the other end of the second arm are arranged at an interval to form an opening, the opening being in communication with the gap.

14. The battery according to any one of claims 11-13, wherein the first arm is provided with a first stopping portion, the first stopping portion being configured for abutting against the first protrusion, to restrain the first arm from moving in the first direction; and/or
the second arm is provided with a second stopping portion, the second stopping portion being configured for abutting against the second protrusion, to restrain the second arm from moving in the first direction.

15. The battery according to any one of claims 11-14, wherein the plug-in structure further comprises a third protrusion arranged on the first surface, the third protrusion is separated from both the first protrusion and the second protrusion, and the first arm and the second arm are configured for clamping the third protrusion.

16. The battery according to claim 15, wherein the third protrusion is provided with two third limiting portions, the two third limiting portions being configured for abutting against the first arm and the second arm, respectively, so as to restrain the first arm and the second arm from moving in the second direction.

17. The battery according to any one of claims 1-16, wherein the battery further comprises a circuit board configured for being electrically connected to the sampling terminal, the circuit board comprising a main body and a connection portion, the connection portion being of a cantilever structure with one end connected to the main body, and the sampling terminal being connected to the connection portion.

18. A power consuming device, comprising a battery according to any one of claims 1-17, the battery being configured for providing electric energy.

19. A method for manufacturing a battery, comprising:
providing a battery cell;
providing a sampling terminal, the sampling terminal being configured for acquiring a voltage or a temperature of the battery cell;
providing a busbar component configured for being electrically connected to the battery cell, where the busbar component comprises a plug-in structure configured for the sampling terminal to be inserted in a first direction to connect with the busbar component, and the plug-in structure is configured for the sampling terminal to be pulled out in a second direction so as to be separated from the busbar component, the first direction intersecting the second direction; and
inserting the sampling terminal into the plug-in structure.

20. An apparatus for manufacturing a battery, comprising:
a first provision device for providing a battery cell;
a second provision device for providing a sampling terminal, the sampling terminal being configured for acquiring a voltage or a temperature of the battery cell;
a third provision device for providing a busbar component configured for being electrically connected to the battery cell, wherein the busbar component comprises a plug-in structure configured for the sampling terminal to be inserted in a first direction to connect with the busbar component, and the plug-in structure is configured for the sampling terminal to be pulled out in a second direction so as to be separated from the busbar component, the first direction intersecting the second direction; and
a mounting module for inserting the sampling terminal into the plug-in structure.
